# EUROPÄISCHE PATENTANMELDUNG

(11) **EP 4 541 733 A1**
(43) Veröffentlichungstag der Anmeldung: **23.04.2025**
(21) Anmeldenummer: 24200277.2
(22) Anmeldetag: 13.09.2024
(51) Int. Cl.: B65G 1/04, B65G 1/137, B65G 47/44, B65G 47/61, B65G 43/08

(54) **VERFAHREN UND UMLADESTATION ZUM VERDICHTEN EINES WARENSTROMS IN EINER HÄNGEFÖRDERANLAGE**

(30) Priorität: 16.10.2023 DE 102023210117
(71) Anmelder: Dürkopp Fördertechnik GmbH, 33719 Bielefeld (DE)
(72) Erfinder: Rehm, Pascal, 33617 Bielefeld (DE); Johannesmann, Thomas, 33719 Bielefeld (DE)
(74) Vertreter: Rau, Schneck & Hübner Patentanwälte Rechtsanwälte PartGmbB

(57) **Zusammenfassung**

Ein Verfahren zum Verdichten eines Warenstroms in einer Hängeförderanlage (1) umfassend die Verfahrensschritte Hängefördern von mit jeweils mindestens einer Ware (2) beladenen Förderbehältem (7) in der Hängeförderanlage (1), automatisches Entladen der Waren (2) aus mehreren Förderbehältern (7) in einen Sammelförderbehälter (58) und Hängefördern des mit den Waren (2) aus mehreren Hängeförderbehältern (7) beladenen Sammelförderbehälters (58) in der Hängeförderanlage (1).

## Beschreibung

Der Inhalt der deutschen Patentanmeldung DE 10 2023 210 117.3 wird durch Bezugnahme hierin aufgenommen.

Die Erfindung betrifft ein Verfahren und eine Umladestation zum Verdichten eines Warenstroms in einer Hängeförderanlage.

DE 10 2021 207 911 A1 offenbart eine Hängeförderanlage, mit der Einzelwaren in Transporttaschen hängend gefördert werden. Die Transporttaschen werden vereinzelt zu einer Entladestation gefördert, dort entladen, die Einzelwaren in einen Versandbehälter geladen und automatisiert verpackt. Dadurch, dass die Einzelwaren vereinzelt in den Transporttaschen transportiert werden, ist eine individuelle und zielgerichtete Navigation der Einzelwaren durch die Hängeförderanlage bis zur Entladestation möglich. Die in den Transporttaschen transportierten Einzelwaren können in der Hängeförderanlage zwischengespeichert und/oder sortiert werden. Wenn in jeder Transporttasche nur eine Einzelware transportiert wird, ist die Transportleistung der Hängeförderanlage und die Speicherkapazität eines auf den Transporttaschen basierenden Speichersystems eingeschränkt.

Es ist die Aufgabe der vorliegenden Erfindung, in einer Hängeförderanlage die Transportleistung und Speicherkapazität zu steigern.

Diese Aufgabe ist erfindungsgemäß gelöst durch ein Verfahren mit den im Anspruch 1 angegebenen Merkmalen sowie durch eine Umladestation mit den in Anspruch 9 angegebenen Merkmalen. Erfindungsgemäß wurde erkannt, dass Waren, die in einer Hängeförderanlage in Förderbehältern hängend gefördert werden, automatisch aus den Förderbehältern entladen und in einem Sammelförderbehälter gesammelt weitertransportiert werden können. Mit dem Sammelförderbehälter werden mehrere Waren gleichzeitig gefördert, die zuvor vereinzelt in Förderbehältern gefördert worden sind. Erfindungsgemäß ist es möglich, den Warenstrom in der Hängeförderanlage zu verdichten und dadurch die Transportleistung und Speicherkapazität der Hängeförderanlage zu erhöhen. Der beladene Sammelförderbehälter wird hängend gefördert entlang der Hängeförderanlage. Insbesondere sind der Förderbehälter und/oder der Sammelförderbehälter als Transporttasche ausgeführt, die insbesondere mittels eines Hängeadapters entlang einer Förderschiene in der Hängeförderanlage gefördert werden kann. Insbesondere ist der Sammelförderbehälter identisch zu dem Hängeförderbehälter ausgeführt. Insbesondere ist eine erste Förderschiene, mit der die Förderbehälter gefördert werden, identisch ausgeführt zu einer zweiten Förderschiene, mit der die Sammelförderbehälter gefördert werden. Die Hängeförderanlage und insbesondere die Umladestation sind unkompliziert aufgebaut. Dadurch, dass die Transporttaschen sowohl als Förderbehälter als auch als Sammelförderbehälter genutzt werden können, ist die Flexibilität bei der Verwendung der Transporttaschen erhöht. Der Anlageninvest ist reduziert.

Der Erfindung liegt insbesondere die Erkenntnis zugrunde, dass es nicht erforderlich ist, bereits beim Beladen der Förderbehälter die spätere Verarbeitung der Ware festzulegen. Es wurde insbesondere erkannt, dass mittels einer automatischen Umladung der Waren eine Verdichtung des Warenstroms möglich ist, auch wenn beim Beladen eines Förderbehälters mit einer Ware deren Verwendung noch nicht bekannt oder noch nicht festgelegt ist.

Es wurde insbesondere erkannt, dass das Beladen der Förderbehälter mit Waren unabhängig von den Aufträgen erfolgen kann. Diese Anwendung ist insbesondere relevant bei der Handhabung von Retouren-Waren, insbesondere im Bereich von E-Commerce. Es wurde insbesondere erkannt, dass die Förderbehälter als Pufferelement und/oder Lagerstufe fungieren. Wenn ein Kundenauftrag, der mehrere Waren umfasst, die, insbesondere als Retouren-Waren, bereits im Warenstrom der Hängeförderanlage vorhanden sind, kann deren Zusammengehörigkeit auch nach der Beladung der Förderbehälter festgestellt werden. Diese Waren können erfindungsgemäß in den Sammelförderbehälter entladen und dort gesammelt, also verdichtet weitertransportiert werden.

Eine weitere vorteilhafte Anwendung ergibt sich insbesondere für die Handhabung von Postsendungen. Erfahrungsgemäß treffen innerhalb eines bestimmten Zeitintervalls, beispielsweise über einen Tag verteilt, unterschiedliche Postsendungen, also Waren, für ein Sortierziel in der Hängeförderanlage ein. Es ist aber unbekannt, wann und wie viele Waren eintreffen werden. Die Zusammengehörigkeit der Waren steht allerdings schon bei der Beladung fest. Aufgrund des zeitlich und/oder räumlich versetzten Eingangs der Waren ist eine gemeinsame Beladung in einen Sammelförderbehälter von vornherein nicht möglich. Erfindungsgemäß ist das automatisierte Umladen in den Sammelförderbehälter trotz des zeitlich und/oder räumlich versetzten Eintreffens möglich. Somit ist ein automatisiertes Umladen zumindest einer Teilmenge der Auftragswaren und insbesondere aller Auftragswaren ermöglicht.

Die Erfindung ermöglicht es insbesondere, dass die gemäß dem Stand der Technik zwingend miteinander verknüpften Bedingungen, dass alle Auftragswaren zeitgleich am Beladeplatz bereitstehen und deren logische Zusammengehörigkeit von vornherein bekannt sein muss, entkoppelt werden können. Da diese Bedingungen in vielen Anwendungen der Fördertechnik nur selten gleichzeitig erfüllt sind, erschließt die Erfindung neue Anwendungsbereiche bei der Handhabung und Sortierung von Waren.

Aufgrund der gesteigerten Transportleistung kann die Anzahl der erforderlichen Zielstellen, insbesondere der erforderlichen Packplätze, in der Hängeförderanlage reduziert werden. Die Investitionskosten für die Hängeförderanlage und insbesondere der Platzbedarf sind reduziert. Durch die gesteigerte Speicherkapazität sinken die Kosten. Aufgrund der automatischen Umladung sind die Betriebskosten reduziert.

Besonders vorteilhaft ist es, wenn in jedem Förderbehälter insbesondere genau eine Ware transportiert wird. Insbesondere wird die Ware beim Beladen in den Förderbehälter eindeutig identifiziert und dem Förderbehälter logisch zugewiesen. Dem Förderbehälter ist eine eindeutige Identifikation zugewiesen, insbesondere mittels des Hängeadapters. Der Förderbehälter und die darin geförderte Ware sind innerhalb der Hängeförderanlage eindeutig identifizierbar, insbesondere mittels mehrerer entlang der Hängeförderanlage angeordneter Identifikationseinheiten, die den Identifikationscode der Förderbehälter erfassen, insbesondere lesen können.

Ein Verfahren gemäß Anspruch 2 vereinfacht das automatische Entladen der Förderbehälter. Die Ausgestaltung eines Förderbehälters, der ein automatisches Öffnen an seiner Unterseite ermöglicht, und das automatische Öffnen des Förderbehälters ist aus DE 10 2021 207 911 A1 bekannt, worauf hiermit ausdrücklich verwiesen wird.

Ein Verfahren gemäß Anspruch 3 ermöglicht ein Zwischenspeichern, also ein Puffern, der Waren aus den Förderbehältern, bevor die Waren in den Sammelförderbehälter abgegeben werden. Dadurch ist es insbesondere möglich, das Entladen der Förderbehälter und das Beladen des Sammelförderbehälters zeitlich zu entkoppeln. Insbesondere ist es nicht erforderlich, dass die Förderbehälter, die in einen Sammelförderbehälter entladen werden sollen, in einem engen Zeitfenster zu der Entladestation zu fördern. Die Bereitstellungszeit für den Sammelförderbehälter ist reduziert. Die Auslastung ist erhöht. Insbesondere werden die Waren aus den Förderbehältern automatisch in den Pufferspeicher entladen, dort gesammelt und insbesondere automatisch in den Sammelförderbehälter abgegeben. Das automatische Entladen der Waren aus den Förderbehältern in den Pufferspeicher erfolgt insbesondere selbsttätig und insbesondere schwerkraftbedingt. Das Entladen ist besonders unaufwändig. Insbesondere sind zusätzliche Entnahmemittel, um die Waren aus den Förderbehältern zu entnehmen, entbehrlich.

Ein Verfahren gemäß Anspruch 4 vereinfacht die selbsttätige, insbesondere schwerkraftbedingte, Entladung einer Ware aus einem Förderbehälter. Insbesondere werden die Waren aus den Förderbehältern unmittelbar in den Pufferspeicher entladen. Zusätzliche Entlademittel, insbesondere eine Rutsche, sind entbehrlich.

Eine Zugangs-Erkennungseinheit gemäß Anspruch 5 erhöht die Sicherheit beim automatischen Umladen. Das Risiko, dass die dem Pufferspeicher zugeführten Waren unvollständig sind, ist reduziert und insbesondere ausgeschlossen. Insbesondere kann die Zugangs-Erkennungseinheit unkompliziert ausgeführt sein. Es wurde insbesondere erkannt, dass es nicht erforderlich ist, die Waren beim Abgeben in den Pufferspeicher zu identifizieren. Es ist ausreichend, zu erfassen, ob die Ware aus dem, insbesondere an der Förderschiene identifizierten, Förderbehälter, fehlerfrei entladen worden ist, also die Ware aus dem Förderbehälter in den Pufferspeicher gelangt ist. Die Zugangs-Erkennungseinheit ist insbesondere dazu ausgeführt, eine digitale Information "Ware in Pufferspeicher abgegeben" oder "Ware nicht in Pufferspeicher abgegeben" zu erzeugen und/oder an eine Steuerungseinheit zu übermitteln. Die Zugangs-Erkennungseinheit ist unkompliziert und kosteneffizient ausgeführt. Die Identifikation der Ware, also die damit verbundenen Informationen, werden von dem Förderbehälter an den Pufferspeicher vererbt. Die Zugangs-Erkennungseinheit dient insbesondere dazu, die Anzahl der Waren zu erfassen, die in den Pufferspeicher abgeben werden. Die Zugangs-Erkennungseinheit ist insbesondere an den Pufferspeicher selbst angeordnet, insbesondere in einem Zugangsbereich des Pufferspeichers, insbesondere an einer Zuführöffnung des Pufferspeichers, die dem Förderbehälter zugewandt ist. Mit der Zugangs-Erkennungseinheit werden die erfassten Waren logisch dem Pufferspeicher zugebucht.

Eine Abgangs-Erkennungseinheit gemäß Anspruch 6 funktioniert im Wesentlichen entsprechend der Zugangs-Erkennungseinheit gemäß Anspruch 5, worauf hiermit verwiesen wird.

Mit der Abgangs-Erkennungseinheit wird erfasst, wie viele Waren aus dem Pufferspeicher in den Sammelförderbehälter abgegeben werden. Mit der Abgangs-Erkennungseinheit kann insbesondere erkannt werden, ob der Pufferspeicher vollständig geleert ist oder ob, insbesondere versehentlich, eine oder mehrere Waren in dem Pufferspeicher zurückgeblieben sind. Sofern der Pufferspeicher entleert ist, werden die zuvor im Pufferspeicher gespeicherten Waren dem Sammelförderbehälter logisch zugebucht. Die Abgangs-Erkennungseinheit erzeugt wie die Zugangs-Erkennungseinheit ein digitales Signal. Der Erkennungsvorgang mittels der Abgangs-Erkennungseinheit ist unkompliziert. Eine Identifizierung der Waren aus dem Pufferspeicher ist nicht erforderlich. Die Identifikation der Waren wird von dem Pufferspeicher beim Umladen auf den Sammelförderbehälter vererbt.

Ein Verfahren gemäß Anspruch 7 vereinfacht das automatische Abgeben der Waren aus dem Pufferspeicher in den Sammelförderbehälter.

Ein Verfahren gemäß Anspruch 8 ermöglicht ein logisch vorteilhaftes Umladen der Waren in die Sammelförderbehälter. Es wurde insbesondere erkannt, dass eine veränderliche Anzahl von Förderbehältern in einen Sammelförderbehälter entladen werden kann. Die Anzahl der zu entladenden Förderbehältern kann ermittelt werden, insbesondere in Abhängigkeit mindestens einer Wareneigenschaft der Waren. Es wurde insbesondere erkannt, dass in Abhängigkeit der zu transportierenden Waren deutliche Grö-ßenunterschiede bezüglich Gurtmaß, Volumen und/oder Gewicht der einzelnen Waren existieren. Die Größenunterschiede können mindestens das Zehnfache, insbesondere mindestens das Zwanzigfache, insbesondere mindestens das Fünfzigfache und bis zu dem Einhundertfachen betragen. Dies betrifft insbesondere das Handhaben von Briefen und/oder Paketen. Beispielsweise kann eine Volumenberechnung zugrunde gelegt werden, um zu vermeiden, dass ein Maximalvolumen der Sammelförderbehälter nicht überschritten wird. Insbesondere wird das Sammeln der Waren in dem Pufferspeicher beendet, wenn ein vorgebbarer Schwellenwert erreicht wird, insbesondere ein Maximalvolumen und/oder ein Maximalgewicht, das mittels des Sammelförderbehälters transportierbar ist. Das Sammeln der Waren in dem Pufferspeicher kann aber insbesondere auch auftragsabhängig erfolgen.

Eine Umladestation gemäß Anspruch 9 weist im Wesentlichen die Vorteile des erfindungsgemäßen Verfahrens auf, worauf hiermit verwiesen wird.

Eine Umladestation gemäß Anspruch 10 ermöglicht ein Zwischenspeichern der aus den Förderbehältern abgegebenen Waren in einem Pufferspeicher. Der Pufferspeicher weist ein schaltbares Abgabeelement auf, um die in dem Pufferspeicher gesammelten Waren gezielt in den Sammelförderbehälter abzugeben und dadurch den Warenstrom in der Hängeförderanlage zu verdichten. Das schaltbare Abgabeelement ist zwischen einer Sammelstellung, in der die Waren in dem Pufferspeicher gesammelt werden, und einer Abgabestellung, in der die Waren aus dem Pufferspeicher abgegeben werden, schaltbar ausgeführt. Dazu ist das Abgabeelement insbesondere mit einem Aktuator, insbesondere mit einem schaltbaren Aktuator, mechanisch gekoppelt.

Eine Umladestation gemäß Anspruch 11 ist unkompliziert ausgeführt und vereinfacht das selbsttätige Entladen der Förderbehälter.

Eine Umladestation gemäß Anspruch 12 ist unkompliziert ausgeführt und ermöglicht das selbsttätige Abgeben der gesammelten Waren aus dem Pufferspeicher.

Eine Umladestation gemäß Anspruch 13 ermöglicht das unkomplizierte Erfassen der Waren beim Zuführen in den oder beim Abgaben aus dem Pufferspeicher.

Die Ausführung des Abgabeelements gemäß Anspruch 14 ist unkompliziert und effizient. Das Abgabeelement ist insbesondere als schwenkbare Klappe ausgeführt, sodass die Waren aus dem Pufferspeicher schwerkraftbedingt herausfallen können. Alternativ kann der öffenbare Boden als seitlich verlagerbare Platte in der Art eines Schiebers ausgeführt sein.

Es ist alternativ denkbar, dass der Pufferspeicher verlagerbar, insbesondere um eine Kippachse kippbar ausgeführt ist, sodass die Waren durch eine Zuführöffnung abgegeben werden, durch die sie zuvor dem Pufferspeicher zugeführt worden sind. Die Waren werden also aus dem Pufferspeicher ausgekippt.

Eine Öffnungseinheit gemäß Anspruch 15 erhöht die Zuverlässigkeit beim Abgeben der Waren in den Sammelförderbehälter aus dem Pufferspeicher.

Eine Rutschfläche, die vertikal unterhalb des Pufferspeichers angeordnet ist und der Öffnungseinheit zugewandt ist, verbessert die zielgerichtete Warenabgabe in den Sammelförderbehälter.

Die Anordnung der Abgangs-Erkennungseinheit in einem der Öffnungseinheit zugewandten Endbereich der Rutschfläche erhöht die Zuverlässigkeit beim Erkennen der in den Sammelförderbehälter abgegebenen Waren.

Sowohl die in den Patentansprüchen angegebenen Merkmale als auch die in dem nachfolgenden Ausführungsbeispiel einer erfindungsgemäßen Umladestation angegebenen Merkmale sind jeweils für sich alleine oder in Kombination miteinander geeignet, den erfindungsgemäßen Gegenstand weiter zu bilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Ansicht einer Hängeförderanlage,
- Fig. 2: eine vergrößerte, teilgeschnittene Ansicht einer Hängefördertechnik der Hängeförderanlage,
- Fig. 3: eine perspektivische Darstellung einer mit einer Ware beladenen Transporttasche als Förderbehälter,
- Fig. 4: eine perspektivische Ansicht einer erfindungsgemäßen Umladestation,
- Fig. 5: eine vergrößerte, teilgeschnittene Ansicht der Umladestation gemäß Fig. 4.

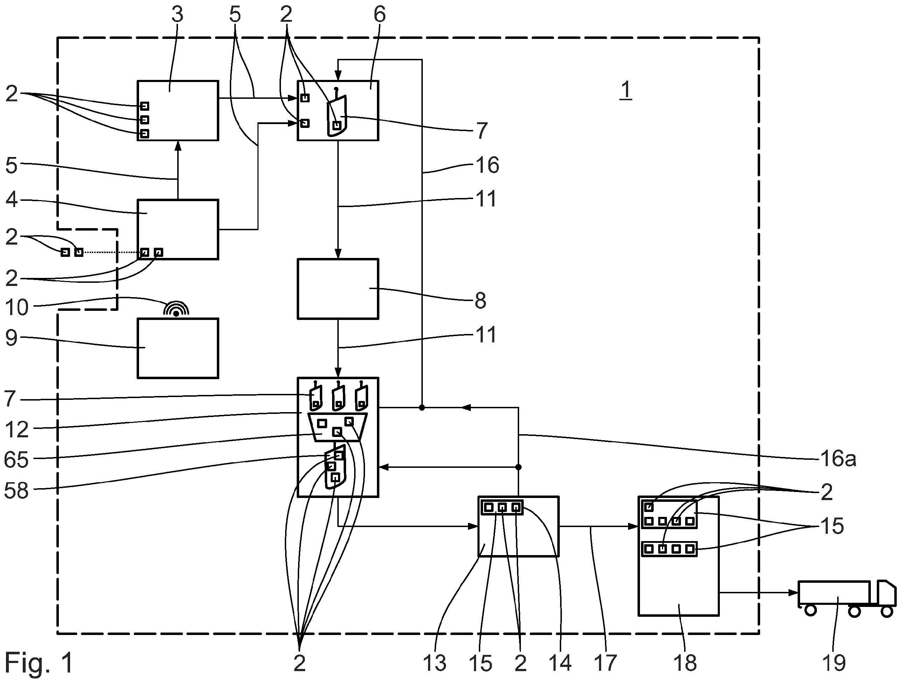

Eine in Fig. 1 als Ganzes mit 1 gekennzeichnete Anlage dient zum Fördern und/oder Transportieren von Waren 2. Die Waren 2 werden insbesondere vereinzelt gefördert und werden deshalb auch als Einzelwaren bezeichnet. Die Anlage 1 ist eine Hängeförderanlage. Die Einzelwaren 2 werden auch als Artikel bezeichnet. Die Anlage 1 umfasst ein Warenlager 3, in dem die Einzelwaren 2 eingelagert sind. Das Warenlager 3 kann als manuelles Lager oder als automatisches Lager ausgeführt sein. Die Anlage 1 weist ferner einen Wareneingang 4 auf, über den Einzelwaren 2 der Anlage 1, insbesondere von extern, zugeführt werden. Dem Wareneingang 4 können auch Retourenwaren zugeführt werden.

Der Wareneingang 4 ist mittels einer Fördertechnik 5 mit dem Warenlager 3 verbunden. Die Fördertechnik 5 ist beispielsweise ein Förderband oder eine manuelle Zubringung der Einzelwaren 2, die insbesondere auch in Gebinden im Wareneingang 4 vorliegen können, zu dem Warenlager 3.

Die Anlage 1 umfasst ferner eine Aufgabestation 6, an der die Einzelwaren in eine Tragevorrichtung 7, die auch als Förderbehälter 7 bezeichnet wird und die als Transporttasche ausgeführt ist, aufgegeben werden. Die Aufgabestation 6 wird auch als Beladestation bezeichnet, da die Transporttaschen 7 jeweils mit einem Artikel 2 beladen werden. Die Aufgabestation 6 ist sowohl mit dem Wareneingang 4 als auch mit dem Warenlager 3 jeweils unabhängig mit einer Fördertechnik 5 verbunden. Mittels der Fördertechnik 5 werden die Einzelwaren 2 von dem Warenlager 3 und/oder dem Wareneingang 4 zur Aufgabestation gefördert.

Es ist auch eine Ausführung der Anlage 1 ohne Fördertechnik zwischen der Aufgabestation 6 und dem Wareneingang 4 bzw. dem Warenlager 3 möglich. In diesem Fall werden die Einzelwaren 2 von dem Wareneingang 4 und/oder dem Warenlager 3 manuell zu der Aufgabestation 6, insbesondere mittels Federbodenwagen oder Palettenhubwagen gefördert.

Die Tragevorrichtungen 7 können jeweils vereinzelt mittels eines in Fig. 1 nicht näher dargestellten Rolladapters in einem Schienensystem geführt transportiert werden. Der Rolladapter wird auch als Hängeadapter bezeichnet. Die Tragevorrichtungen 7 werden hängend gefördert. Die Anlage 1 ist eine Hängeförderanlage. Vorteilhaft ist es, wenn die Tragevorrichtungen 7 jeweils mittels einer Identifikationseinrichtung eindeutig identifizierbar sind. Dazu kann jeweils der Rolladapter einen integrierten RFID-Chip aufweisen, auf dem Identifikationsdaten gespeichert sind. Die Identifikationsdaten können mit geeigneten Leseeinrichtungen, die insbesondere entlang des Transportweges der Hängeförderanlage 1 angeordnet sind, erfasst werden, um den Förderweg der Tragevorrichtungen 7 entlang der Hängeförderanlage 1 nachzuverfolgen und zu steuern.

Zur hängenden Förderung in der Hängeförderanlage 1 sind die Tragevorrichtungen 7 jeweils mit einem Rolladapter formschlüssig verbunden. Insbesondere weisen die Tragevorrichtungen 7 jeweils einen Haken auf, der in eine entsprechende Ausnehmung des Rolladapters einhängbar ist. An der Ausnehmung des Rolladapters kann auch ein Kleiderbügel mit einem daran hängenden Kleidungsstück eingehängt werden. Insbesondere dient jede Tragevorrichtung 7 für die Förderung genau einer Einzelware 2.

Alternativ kann auch der Rolladapter hakenförmig ausgeführt sein und in eine Ausnehmung der Tragevorrichtung 7 eingehängt werden.

Die Hängeförderanlage 1 umfasst eine Sortiereinheit 8, die zum Sortieren der Tragevorrichtungen 7, also zum Verändern der Reihenfolge der Einzelwaren im Warenstrom, dient. Die Sortiereinheit 8 kann verschiedentlich ausgeführt sein. Die Sortiereinheit 8 wird auch als Taschen-Sorter bezeichnet. Die Sortiereinheit 8 kann mehrere parallel und/oder in Reihe angeordnete Staustrecken und/oder einen oder mehrere Umlaufkreisel aufweisen.

Zusätzlich oder alternativ kann die Sortiereinheit 8 als Matrixsorter ausgeführt sein.

Die Sortiereinheit 8 dient insbesondere zum Zusammenstellen der Einzelwaren 2 zu logischen Gruppen. Insbesondere werden die Einzelwaren 2 zu Gruppen von Einzelwaren 2 zusammengefasst, die einen Auftrag 15 bilden. In der Sortiereinheit 8 können auch Gruppen von Einzelwaren 2 gebildet werden, die Teil eines Auftrags 15 sind.

Die Hängeförderanlage 1 umfasst eine zentrale Steuereinheit 9, die signaltechnisch insbesondere mit den Leseeinrichtungen entlang der Hängeförderanlage 1 in Signalverbindung steht. Die Signalverbindung kann kabelgebunden oder kabellos erfolgen. Eine kabellose, funkgebundene Signalverbindung ist in Fig. 1 mit einem Symbol 10 zur Funkübertragung dargestellt.

Die Hängeförderanlage 1 umfasst ein Schienensystem 11, mittels dem die Tragevorrichtungen 7 von der Aufgabestation 6 zu der Sortiereinheit 8 und durch die Sortiereinheit 8 gefördert werden. Das Schienensystem 11 dient auch zur fördertechnischen Verbindung der Sortiereinheit 8 mit mindestens einer Umladestation 12. Insbesondere sind mehrere Umladestationen 12 vorhanden. An der Umladestation 12 werden die Förderbehälter 7 automatisch geöffnet und entladen, die Waren 2 aus den Förderbehältern 7 in einem Pufferspeicher 65 gesammelt und in einen Sammelförderbehälter 58 abgegeben. Mit dem Sammelförderbehälter 58 werden mehrere Waren 2, insbesondere auftragsorientiert, von der Umladestation 12 an einen Packplatz 13 gefördert und insbesondere automatisch in ein Verpackungsbehältnis 14 gepackt.

Insbesondere sind mehrere Umladestationen 12 vorgesehen. An der Umladestation 12 werden die Tragevorrichtungen 7 automatisch geöffnet und entladen, insbesondere indem die Einzelware 2 aus der geöffneten Tragevorrichtung 7 schwerkraftbedingt nach unten herausfällt. Zum automatischen Öffnen der Tragevorrichtungen 7 in der Umladestation 12 dient eine nicht näher dargestellte Öffnungseinheit. Die Öffnungseinheit stellt eine Entladeeinheit dar.

Alternativ zu der Öffnungseinheit kann die Umladestation 12 auch ein nicht näher dargestelltes Stellelement aufweisen, um die Transporttasche 7 in der Entladeposition um eine, insbesondere horizontal und insbesondere senkrecht zur Förderrichtung der Transporttasche 7 orientierte Schwenkachse oder um eine, insbesondere parallel zur Förderrichtung der Transporttasche 7 orientierte Schwenkachse seitlich zu schwenken und dadurch den Artikel 2 aus der Transporttasche 7 auszukippen.

Wesentlich ist, dass die Umladestation 12 ein automatisches Entladen der Transporttaschen 7 ermöglicht.

Die in der Umladestation 12 entleerten Tragevorrichtungen 7 werden über eine Rückführstrecke 16 der Hängeförderanlage 1 zurückgeführt, mittels einer nicht dargestellten Schließeinheit geschlossen, also in ihren Ursprungszustand zurückversetzt, und beispielsweise an der Aufgabestation 6 als Leertaschen zum Beladen mit Einzelwaren 2 wieder zur Verfügung gestellt.

An den Packplatz 13 ist ebenfalls eine Rückführstrecke 16a angeschlossen, die in die Rückführstrecke 16 mündet, um die entladenen Sammelförderbehälter 58 für eine erneute Beladung zurückzuführen. Entsprechend kann die Rückführstrecke 16a, wie diese in Fig. 1 gezeigt ist, zusätzlich unmittelbar zur Umladestation 12 zurückgeführt werden. Vorteilhaft ist es, dass die Förderbehälter 7 und die Sammelförderbehälter 58 insbesondere identisch ausgeführt sind, sodass deren Verwendung in der Hängeförderanlage 1 besonders flexibel ermöglicht ist.

Mit dem Packplatz 13 ist fördertechnisch eine Abführstrecke 17 verbunden, die den Packplatz 13 mit einem Warenausgang 18 verbindet. Über den Warenausgang 18 können die Aufträge 15 mit den Einzelwaren 2 die Anlage 1 verlassen. Die in der Anlage 1 abgearbeiteten Aufträge 15 können unterschiedliche Artikel und unterschiedliche Anzahlen der Artikel aufweisen. Es ist auch denkbar, dass ein Auftrag 15 nur eine einzige Einzelware 2 aufweist. Aufträge 15 aus dem Warenausgang 18 können mittels externer Transportmittel 19 wie beispielsweise Lastkraftwagen, abtransportiert werden.

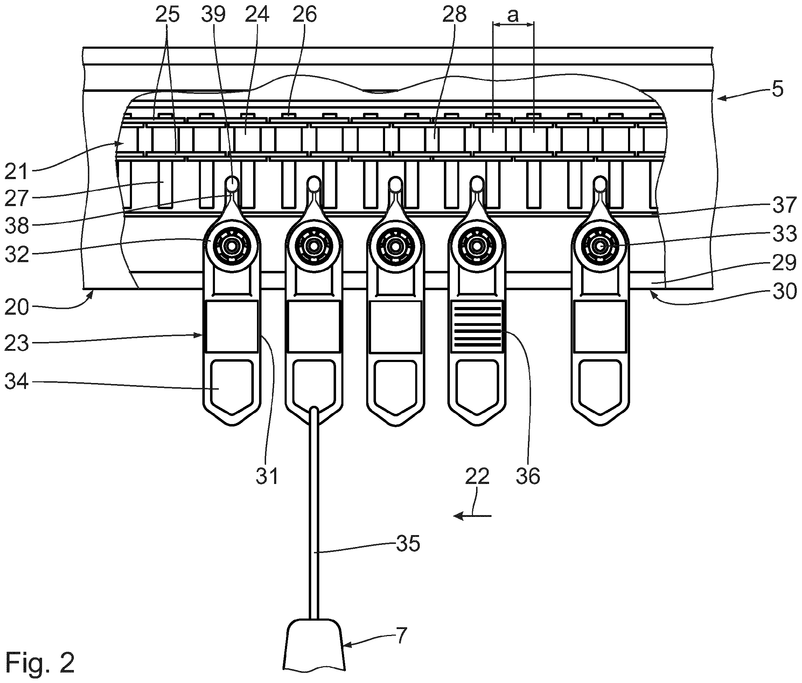

Nachfolgend wird anhand von Fig. 2 die Fördertechnik 5 näher erläutert. Die Fördertechnik 5 weist eine Transportschiene 20 auf, die auch als erste Förderschiene 20 bezeichnet wird und die mittels geeigneter Trageinrichtungen in einem Raum verlegbar ist. In der als Hohlkasten-Profil ausgebildeten Transportschiene 20 ist eine Antriebskette 21 angeordnet, die mittels nicht dargestellter Antriebsmittel entlang einer Förderrichtung 22 antreibbar ist. Weiterhin sind Halteelemente 23 vorgesehen, die mittels der Antriebskette 21 in der Transportschiene 20 bewegbar sind. Die Halteelemente 23 sind Hängeadapter.

Bei der Antriebskette 21 handelt es sich um eine sogenannte Rollen-Kette, die Rollen 24 aufweist, die in geringem Abstand voneinander mittels Verbindungslaschen 25 miteinander verbunden sind. Die Bolzen 26 weisen nach unten vorstehende, als Mitnehmer 27 dienende bolzenförmige Verlängerungen auf. Die Bolzen 26 mit den Mitnehmern 27 verlaufen normal zur Transportschiene 20 in einer durch die Förderrichtung 22 aufgespannten Vertikal-Ebene.

Die Antriebskette 21 ist in Richtung der Bolzen 26, also senkrecht und quer zur Förderrichtung 22 mittels die Verbindungslaschen 25 untergreifende Führungen 28 in der Transportschiene 20 geführt und gehalten. Der Mittenabstand a benachbarter Mitnehmer 27 in der Transportschiene 20 in der Förderrichtung 22 entspricht exakt der Teilung der Antriebskette 21 und ist insoweit unveränderbar und konstant.

An der Unterseite der Transportschiene 20 sind zwei aufeinander zu gerichtete Führungsstege 29 ausgebildet, zwischen denen ein sich in Längsrichtung der Transportschiene 20, also in Förderrichtung 22, erstreckender Schlitz 30 ausgebildet ist bzw. begrenzt wird. Durch diesen Schlitz 30 ragt ein flaches Tragteil 31 jedes Hängeadapters 23 nach unten aus der Transportschiene 20 heraus. In seinem oberen Bereich weist der Hängeadapter 23 beiderseits des Tragteils 31 je eine Laufrolle 32 auf, die sich jeweils auf einen der beiden Führungsstege 29 abstützt und hierauf in Förderrichtung 22 verschiebbar ist. Es ist also nur ein Paar von Laufrollen 32 vorhanden, die um eine gemeinsame Achse 33 drehbar sind, so dass der gesamte Hängeadapter 23 in der Transportschiene 20 um diese Achse 33 pendeln kann.

Das Tragteil 31 weist an seinem unteren Ende eine Aufnahmeöffnung 34 auf, in die die Transporttasche 7, insbesondere mit einem Transporthaken 35 einhängbar ist. Zwischen der Aufnahmeöffnung 34 und der Unterseite der Transportschiene 20 ist ein Identifizierungselement 36 angeordnet, bei dem es sich um einen Transponder, insbesondere einen RFID-Chip oder einen Barcode handeln kann. Das Identifizierungselement 36 verläuft entsprechend der Anordnung des plattenartigen Tragteils 31 in Förderrichtung 22, liegt also mit seiner Hauptfläche offen quer zur Förderrichtung 22, also zur Seite hin. Es ist damit über eine nicht näher dargestellte Identifizierungseinheit möglich, das Identifizierungselement 36 eindeutig zu erfassen, da es nicht in Überdeckung mit anderen Identifizierungselementen 36 kommen kann.

Eine Transporttasche 7 mit einem zu transportierenden Artikel bleibt nach dem Einhängen in den Hängeadapter 23 während des gesamten Transportvorgangs an diesem Hängeadapter 23, ist mit diesem also gleichsam "verheiratet". Der zu transportierende Artikel wird über das Identifizierungselement 36 und damit über den Hängeadapter 23 gesteuert.

Die Transportschiene 20 weist unmittelbar oberhalb der Laufrollen 32 aufeinander zu gerichtete horizontale Begrenzungsstege 37 auf, die zwischen sich einen Schlitz begrenzen. Durch diesen Schlitz erstreckt sich ein stielartiger Ansatz 38 des Hängeadapters 23, der einstückig mit dem Tragteil 31 an dessen oberen Ende ausgebildet ist. Am oberen Ende dieses stielartigen Ansatzes 38 ist ein Anschlag 39 nach Art eines Querriegels ausgebildet, dessen Erstreckung horizontal quer zur Förderrichtung 22 größer ist als die Breite des Schlitzes, so dass bei einem Neigen des Hängeadapters 23 gegenüber der Transportschiene 20 dieser Anschlag 39 zur Anlage auf den Begrenzungsstegen 37 kommt. Somit ist eine weitere Neigung der Hängeadapter 23 verhindert. Der Ansatz 38 und der Anschlag 39 haben also die Grundform eines Hammers.

Die Mitnehmer 27 der Antriebskette 21 erstrecken sich bis unmittelbar oberhalb der Begrenzungsstege 37 so dass ein zwischen zwei Mitnehmern 27 befindlicher Hängeadapter 23 immer zuverlässig mitgenommen wird, also nicht außer Eingriff mit dem Mitnehmer 27 kommt.

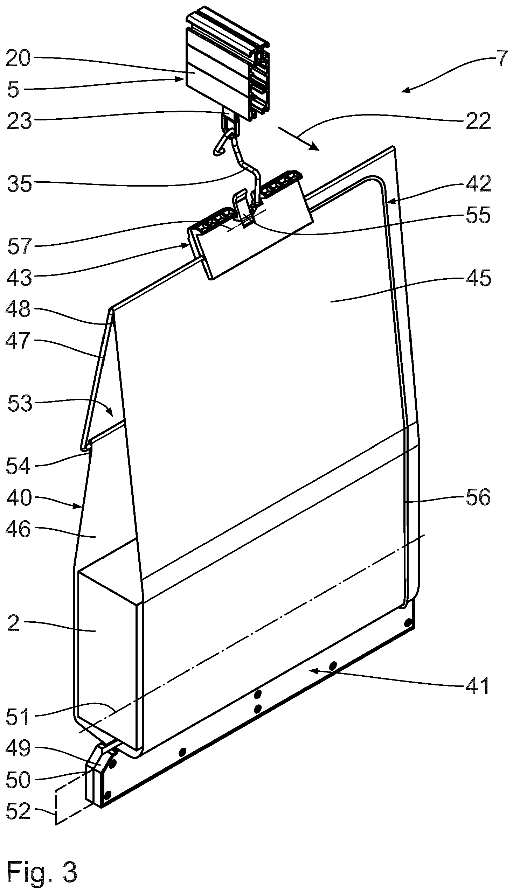

Nachfolgend wird anhand von Fig. 3 die Transporttasche 7 näher erläutert. Die Transporttasche 7 wird auch als Tragvorrichtung bezeichnet.

Die Transporttasche 7, die auch als Tragvorrichtung bezeichnet wird, weist eine Tragwand 40, eine Verschlusseinrichtung 41, eine Betätigungseinrichtung 42 und eine Aufhängeeinrichtung 43 auf. Die Betätigungseinrichtung 42 und die Aufhängeeinrichtung 43 sind Bestandteil einer Öffnungsmechanik der Transporttasche 7.

Die Aufhängeeinrichtung 43 ist an der Tragwand 40 angebracht. Die Aufhängeeinrichtung 43 umfasst einen Transporthaken 35 zum Befestigen der Tragvorrichtung 7 an dem Rolladapter 23 eines Schienensystems 5. Das Schienensystem 5 entspricht der Fördertechnik. Der Rolladapter 23 ist in einem Führungsprofil 20 des Schienensystems 5 linear verschiebbar gelagert. Das Führungsprofil 20 ist eine Transportschiene. Mittels eines nicht dargestellten Schienenantriebs kann der Rolladapter 23 zusammen mit der daran angebrachten Tragvorrichtung 7 entlang des Führungsprofils 20 automatisiert verlagert werden.

Die Tragwand 40 weist eine Vorderwand 45 und eine Rückwand 46 auf. Die Vorderwand 45 ist entlang einer Transportrichtung 22 vorne und die Rückwand 46 ist entlang der Transportrichtung 22 hinten an der Tragvorrichtung 7 angeordnet. Die Transportrichtung 22 entspricht der Förderrichtung. Die Vorderwand 45 ist über einen Beladerahmen 47 an der Aufhängeeinrichtung 43 angebracht. Hierzu weist die Vorderwand 45 an Ihrer Oberseite eine Rahmenschlaufe 48 auf. Eine Vorderseite des Beladerahmens 47 erstreckt sich durch die Rahmenschlaufe 48 der Vorderwand 45 hindurch. Eine Oberseite der Rückwand 46 ist über eine Rahmenschlaufe 54 an einer Rückseite des Beladerahmens 47 angebracht. Die Vorderwand 45 und die Rückwand 46 sind somit über den Beladerahmen 47 an der Aufhängeeinrichtung 43 angebracht.

Die Verschlusseinrichtung 41 weist eine Vorder-Schließleiste 49 und eine Hinter-Schließleiste 50 auf. Die Verschlusseinrichtung 41 weist eine parallel zu einer Längsachse 51 der Tragvorrichtung 7 orientierte Haupterstreckung auf. Die Verschlusseinrichtung 41 überragt die Tragwand 40 entlang der Längsachse 51 zu beiden Seiten. Die Unterseite der Vorderwand 45 ist an der Vorder-Schließleiste 49 angebracht. Die Unterseite der Rückwand 46 ist an der Hinter-Schließleiste 50 angebracht. Die Tragvorrichtung 7 weist eine vertikal und parallel zu der Längsachse 51 orientierte Mittelebene 52 auf.

In der Fig. 1 ist die Tragvorrichtung 7 in einem Verschlusszustand dargestellt. Eine Unterseite der Vorderwand 45 ist über die Verschlusseinrichtung 41 mit einer Unterseite der Rückwand 46 verbunden. Die Vorder-Schließleiste 49 ist hierzu an der Hinter-Schließleiste 50 befestigt und die Tragwand 40 begrenzt ein Tragvolumen 53 nach vorne, nach hinten und nach unten. Die Vorder-Schließleiste 49 kontaktiert die Hinter-Schließleiste 50 im Bereich der Mittelebene 52. Die Vorderwand 45 und die Rückwand 46 sind aus einem textilen Material und formflexibel ausgebildet. Die in dem Tragvolumen 53 angeordneten Artikel 2 befinden sich aufgrund der Schwerkraft an einer Unterseite der Tragwand 40. Aufgrund der flexiblen, insbesondere biegeweichen, Ausbildung der Tragwand 40 nimmt diese eine der Form der Artikel 2 entsprechende Form an. Die Artikel 2 werden somit fest in dem Tragvolumen 53 gehalten.

Die Betätigungseinrichtung 42 umfasst ein Betätigungsmittel 55 und ein Übertragungsmittel 56. Die Betätigungseinrichtung 42 ist zum Lösen der Verbindung zwischen der Vorder-Schließleiste 49 und der Hinter-Schließleiste 50 und damit zwischen der Vorderwand 45 und der Rückwand 46 aus dem Verschlusszustand ausgebildet.

Das Betätigungsmittel 55 ist als Betätigungshebel ausgebildet. Das Betätigungsmittel 55 ist an der Aufhängeeinrichtung 43 um eine parallel zu der Längsachse 51 orientierte Hebelachse 57 drehbar gelagert.

Das Betätigungsmittel 55 ist mit dem Übertragungsmittel 56 mechanisch gekoppelt. Die mechanische Kopplung ist dazu ausgeführt, eine entgegen der Transportrichtung 22 orientierte Betätigungskraft in eine parallel zu der Längsachse 51 orientierte Übertragungskraft zu wandeln. Das Betätigungsmittel 55 steht in kraftübertragender Verbindung mit dem Übertragungsmittel 56.

Das Übertragungsmittel 56 ist als Bowdenzug ausgebildet. Das Übertragungsmittel 56 erstreckt sich von der Aufhängeeinrichtung 43 zu der Verschlusseinrichtung 41.

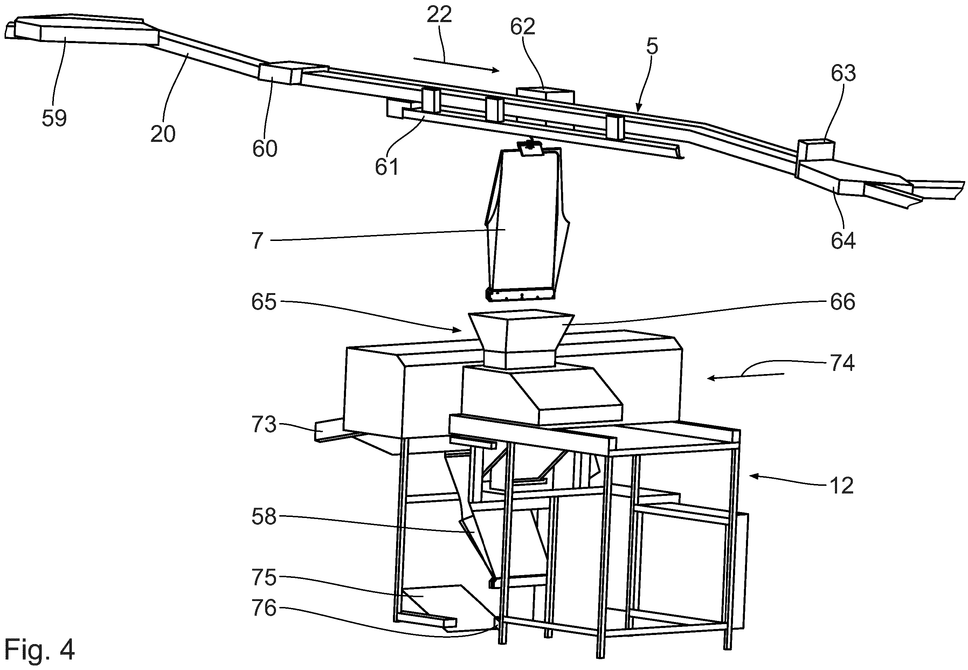

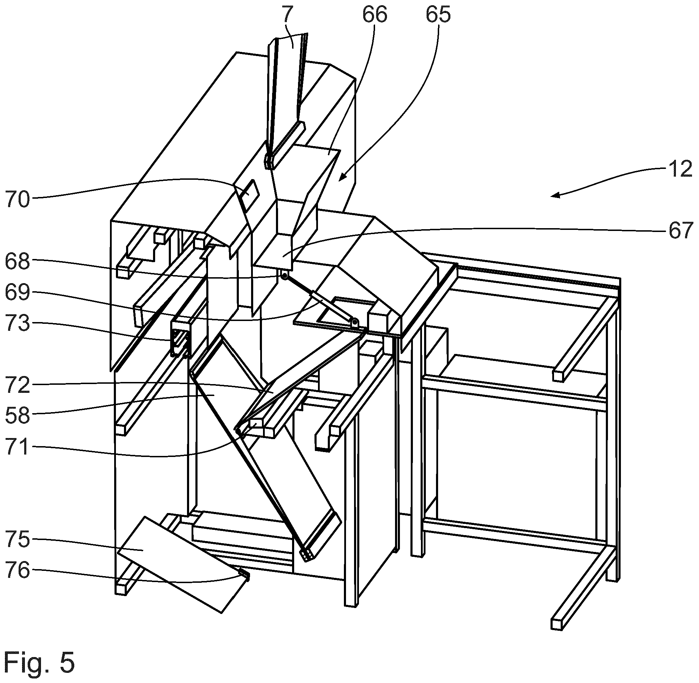

Nachfolgend wird anhand von Fig. 4 und 5 der Aufbau der Umladestation 12 näher erläutert. Die Umladestation 12 weist die erste Förderschiene 20 auf. Die erste Förderschiene 20 bildet eine Zuführstrecke zum Zuführen der Förderbehälter 7 mittels der Hängeadapter 23 entlang der ersten Förderrichtung 22 in eine Entladeposition, die in Fig. 4 dargestellt ist. Die erste Förderschiene 20 ist insbesondere Bestandteil der Fördertechnik 5 der Hängeförderanlage 1.

Stromaufwärts der Entladeposition ist an der ersten Förderschiene 20 eine Abgabeweiche 59 angeordnet, um zu entladende Förderbehälter 7 in die erste Förderschiene 20 einzuschleusen.

Stromabwärts der Abgabeweiche 59 und stromaufwärts der Entladeposition ist eine erste Vereinzelungseinheit 60 angeordnet, um die Förderbehälter 7 vereinzelt der Entladeposition zuzuführen.

Die Entladeposition definiert einen sich entlang der ersten Förderrichtung 22 erstreckenden Bereich der ersten Förderschiene 20. Die Längserstreckung dieses Bereichs ist insbesondere abhängig von der Fördergeschwindigkeit der Förderbehälter 7 entlang der ersten Förderschiene 20.

Im Bereich der Entladeposition ist eine Seitenführung 61 an der ersten Förderschiene 20 angeordnet. Die Seitenführung 61 verhindert ein unbeabsichtigtes Pendeln der Förderbehälter 7, die in die Entladeposition zugeführt werden, insbesondere ein Pendeln um eine Achse parallel zur Förderrichtung 22. Die Seitenführung 61 ist insbesondere als statisches Längselement ausgeführt, das seitlich beabstandet und insbesondere unterhalb der ersten Förderschiene 20 angeordnet ist. Die Seitenführung 61 ist insbesondere unmittelbar an der ersten Förderschiene befestigt, insbesondere angeschraubt.

Im Bereich der Entladeposition, insbesondere stromaufwärts der Entladeposition oder unmittelbar an der Entladeposition, ist an der ersten Förderschiene 20 eine Endladeeinheit 62 angeordnet, die eine nicht näher dargestellte Auslösemechanik umfasst, um die in der Entladeposition angeordneten Förderbehälter 7 automatisch zu öffnen. Dadurch werden die Fördertaschen 7 automatisch entladen. Die Auslösemechanik kann ein Betätigungselement aufweisen, das zum Betätigen des Betätigungsmittels 55 des Förderbehälters 7 dient. Die Ausführung und die Funktion einer derartigen Auslösemechanik sind in DE 10 2021 207 911 A1 beschrieben, worauf hiermit ausdrücklich verwiesen wird.

Stromabwärts der Entladeposition, insbesondere am Ende der ersten Förderschiene 20, ist eine zweite Vereinzelungseinheit 63 angeordnet, um die entladenen Förderbehälter 7 mittels einer Aufgabeweiche 64 in eine nachfolgende Förderstrecke mit fester Mitnahme aufzugeben, insbesondere in die Rückführstrecke 16.

Die Förderung der Förderbehälter 7 entlang der ersten Förderschiene 20 erfolgt stromabwärts der Abgabeweiche 59 schwerkraftbedingt. In diesem Bereich ist die erste Förderschiene 20 gegenüber der Horizontalen nach unten geneigt. Nach der ersten Vereinzelungseinheit 60 werden die Hängeadapter mit einer festen Mitnahme gefördert, wie dies anhand von Fig. 2 erläutert worden ist. Stromabwärts der Entladeposition endet die feste Mitnahme und eine weitere Förderung der Förderbehälter 7 bis zur zweiten Vereinzelungseinheit 63 kann zumindest abschnittsweise eine selbsttätige, schwerkraftbedingte Förderung erfolgen, indem die erste Förderschiene 20 gegenüber der Horizontalen nach unten geneigt ist. Nach der zweiten Vereinzelungseinheit 63 erfolgt eine Förderung der Förderbehälter 7 durch feste Mitnahme entsprechend Fig. 2.

Die Umladestation 12 weist den Pufferspeicher 65 auf. Der Pufferspeicher 65 ist im Bereich der Entladeposition angeordnet. Der Pufferspeicher 65 ist vertikal beabstandet unterhalb der ersten Förderschiene 20 an der Entladeposition angeordnet. In einem oberen, der ersten Förderschiene 20 zugewandten Bereich weist der Pufferspeicher 65 einen Zuführtrichter 66 auf.

Der Pufferspeicher 65 weist eine Zuführöffnung auf, die an dem Pufferspeicher 65 oben angeordnet ist, der ersten Förderschiene 20 zugewandt. Der Zuführöffnung gegenüberliegend ist an dem Pufferspeicher 65 eine Abführöffnung ausgebildet. Bezüglich einer Längsachse des Pufferspeichers 65 sind die Zuführöffnung und die Abführöffnung konzentrisch zueinander und insbesondere fluchtend angeordnet. Der Pufferspeicher 65 ist schachtartig ausgeführt mit der Längsachse, die insbesondere vertikal orientiert ist. Der Pufferspeicher 65 weist ein Puffervolumen auf, das insbesondere durch den Schachtabschnitt, die Zuführöffnung und die Abführöffnung begrenzt ist. Das Puffervolumen ist zur Aufnahme mehrerer Waren, insbesondere von mindestens drei Waren, insbesondere von mindestens fünf Waren, insbesondere von mindestens zehn Waren geeignet. Insbesondere ist das Puffervolumen derart ausgeführt, dass sämtliche Waren 2 eines Mehrwarenauftrags in dem Pufferspeicher 65 zwischengespeichert werden können. Insbesondere ist das Puffervolumen derart bemessen, dass für mindestens 90% aller Aufträge jeweils die Waren eines Auftrags in dem Puffervolumen bevorratet werden können.

Entlang der Längsachse ist in dem Pufferspeicher 65 zwischen der Zuführöffnung und der Abführöffnung ein schaltbares Abgabeelement 67 angeordnet, das um eine Schwenkachse 68 schwenkbar angeordnet ist. Die Schwenkachse 68 ist insbesondere horizontal orientiert und insbesondere senkrecht zur ersten Förderrichtung 22. Die Schwenkachse 68 kann auch parallel zur Förderrichtung 22 oder quer in einer Horizontalebene orientiert sein.

Das Schwenken des Abgabeelements 67 erfolgt insbesondere mittels einen schaltbaren Aktuators 69, der einen Verlagerungsantrieb bildet. Gemäß dem gezeigten Ausführungsbeispiel ist der Aktuator 69 als linear verlagerbarer Antrieb ausgeführt, insbesondere als Pneumatikzylinder. Es versteht sich, dass der lineare Antrieb auch als Hydraulikzylinder oder elektromotorischer Spindelantrieb ausgeführt sein kann. Der Aktuator 69 ist mit einem ersten Ende fest in der Umladestation 12 gehalten und mit einem zweiten Ende an einer Unterseite des Abgabeelements 67 befestigt. Insbesondere ist der Aktuator 69 derart in der Umladestation 12 integriert, dass das Entladen der Förderbehälter, das Aufnahmen der Waren in dem Pufferspeicher 65 und das Abgeben der Waren 2 aus dem Pufferspeicher 65 in den Sammelförderbehälter 68 durch den Aktuator 69 nicht gestört wird.

Gemäß Fig. 5 befindet sich das Abgabeelement 67 in einer Halteposition. In der Halteposition ist ein freier Durchgang durch den schachtartigen Pufferspeicher 65 blockiert. Das Abgabeelement 67 ist in der Halteposition quer und insbesondere senkrecht zur Längsachse orientiert. Das Abgabeelement 67 ist in der Halteposition im Wesentlichen horizontal ausgerichtet.

Durch Betätigung des Aktuators 69, insbesondere durch Einziehen der Kolbenstange in den Zylinder, wird das Abgabeelement 67 um die Schwenkachse 68 nach unten, insbesondere in eine Vertikalorientierung geschwenkt. Insbesondere wird das Abgabeelement 67 bezüglich der Schwenkachse 68 um einen Schwenkwinkel von mindestens 90° und insbesondere von größer 90° geschwenkt, sodass das Abgabeelement 67 den freien Durchgang der Waren durch den Pufferspeicher 65 nicht beeinträchtigt.

An dem Pufferspeicher 65 ist eine Zugangs-Erkennungseinheit 70 angeordnet, die in Fig. 5 rein schematisch dargestellt ist. Die Zugangs-Erkennungseinheit 70 dient zum Erfassen des Zugangs einer Ware 2 in den Pufferspeicher 65. Die Zugangs-Erkennungseinheit ist insbesondere als Lichtschranke und/oder als Lichtgitter ausgeführt. Die Zugangs-Erkennungseinheit 70 ist quer und insbesondere senkrecht zur Längsachse orientiert, insbesondere horizontal. Waren 2, die schwerkraftbedingt durch den Pufferspeicher 65 gefördert werden, müssen zwangsläufig die Zugangs-Erkennungseinheit 70 passieren. Die Zugangs-Erkennungseinheit 70 ist insbesondere vertikal oberhalb des Abgabeelements 67 angeordnet.

Vertikal unterhalb des Abgabeelements 67 ist eine Abgangs-Erkennungseinheit 71 angeordnet, die im Wesentlichen identisch ausgeführt ist zu der Zugangs-Erkennungseinheit 70. Die Erkennungseinheiten 70, 71 können beispielsweise an Seitenwänden des Schachts des Pufferspeichers 65 integriert angeordnet sein.

Es ist auch denkbar, die Erkennungseinheiten 70, 71 außerhalb des Schachts, also unmittelbar oberhalb der oberen Zuführöffnung bzw. unterhalb der unteren Abführöffnung anzuordnen. Die Erkennungseinheiten 70, 71 stehen mit der Steuereinheit 9 in Signalverbindung.

Vertikal unterhalb des Pufferspeichers 65, insbesondere der Abgabeöffnung, ist eine gegenüber der Horizontalen nach unten geneigt orientierte Rutschfläche 72 angeordnet.

An der Umladestation 12 ist eine zweite Förderschiene 73 ausgebildet, die in vertikaler Richtung unterhalb der ersten Förderschiene 20 und insbesondere vertikal unterhalb des Pufferspeichers 65 verläuft. Die zweite Förderschiene 73 ist insbesondere identisch zu der ersten Förderschiene 20 ausgeführt. In der zweiten Förderschiene 73 können Hängeadapter 23 gefördert werden. An den Hängeadaptern 23 sind die Sammelförderbehälter 58 angeordnet, die insbesondere identisch zu den Förderbehältern 7 ausgeführt sind. Die Sammelförderbehälter 58 werden entlang der zweiten Förderschiene 73 entlang einer zweiten Förderrichtung 74 gefördert. Entlang der zweiten Förderschiene 73 ist eine nicht näher dargestellte Stoppeinrichtung angeordnet. Die Stoppeinrichtung ist insbesondere vertikal unterhalb des Pufferspeichers 65 angeordnet, um einen zu beladenden Sammelförderbehälter 58 zuverlässig unterhalb des Pufferspeichers 65 zu stoppen.

An dieser Position ist ferner eine Öffnungseinheit angeordnet, um die zu beladenden Sammelförderbehälter 58 in der Beladeposition zu öffnen. Das Öffnen des Sammelförderbehälters 58 erfolgt insbesondere dadurch, dass der Sammelförderbehälter 58 um eine, insbesondere horizontal orientierte, Schwenkachse an den Hängeadaptern 23 geschwenkt wird, wie dies in Fig. 4 und 5 dargestellt ist. Der Sammelförderbehälter 58 wird dadurch aus einer vertikal nach unten hängenden Anordnung zu der Rutschfläche 72 hin geschwenkt und dadurch eine Beladeöffnung des Sammelförderbehälters 58 geöffnet. Der Sammelförderbehälter 58 wird an seiner Oberseite geöffnet, insbesondere durch Schwenken des Beladerahmens 47 in eine im Wesentlichen horizontale Position. Die Beladeöffnung des Sammelförderbehälters 58 ist durch den Beladerahmen 47 begrenzt.

Insbesondere erfolgt das Öffnen des Sammelförderbehälters 58 dadurch, dass zwischen dem Hängeadapter 23 und dem Beladerahmen 47 eine Kupplung gebildet ist, die eine Drehung des Sammelkörperbehälters 58 um eine vertikale Drehachse ermöglicht. Insbesondere ist in dem Bereich der Öffnungseinheit eine in Fig. 5 nicht dargestellte, feststehende Kufe angeordnet, die bezogen auf die vertikale Drehachse des Sammelförderbehälters 58 exzentrisch angeordnet ist.

Wenn der Sammelförderbehälter 58 gegen die feststehende Kufe fährt, wird ein Drehmoment um die vertikale Drehachse auf den Sammelförderbehälter 59 ausgeübt und dieser in eine Beladeposition gedreht, in der die Beladeöffnung des Sammelförderbehälters parallel zur Förderrichtung der zweiten Förderschiene 73 orientiert ist. In der Transportposition ist die Beladeöffnung des Sammelförderbehälters 58 quer, insbesondere senkrecht, zur Förderrichtung der zweiten Förderschiene 73 orientiert.

Der Sammelförderbehälter 58 befindet sich in der Transportanordnung insbesondere dann, wenn er entlang der Förderrichtung vor oder nach der feststehenden Kufe angeordnet ist. Insbesondere wird der Sammelförderbehälter 58 aus der Beladeanordnung selbsttätig, insbesondere schwerkraftbedingt, in die Transportanordnung zurückverlagert, sobald er nicht mehr an der feststehenden Kufe anliegt.

Bezüglich Aufbau und Funktion einer derartigen Öffnungseinheit wird auf EP 2 418 160 B1 ausdrücklich verwiesen.

Es ist alternativ denkbar, dass Betätigungsmittel vorhanden sind, die, insbesondere geschaltet, den Sammelförderbehälter 58 von der Transportanordnung in die Beladeanordnung und/oder zurückverlagern. Die Öffnungseinheit ist insbesondere schaltbar ausgeführt und steht mit der Steuereinheit 9 in bidirektionaler Signalverbindung.

Vertikal unterhalb der Beladeposition ist in der Umladestation 12, insbesondere bodennah, eine Prallfläche 75 mit einem Fehlbeladungssensor 76 angeordnet. Die Prallplatte 75 und der Fehlbeladungssensor 76 sind insbesondere derart in der Umladestation 12 angeordnet, dass eine aus dem Pufferspeicher 65 abgegebene Ware 2, die in unbeabsichtigter Weise nicht in einen bereitgestellten und geöffneten Sammelförderbehälter 58 abgegeben wird, erfassen kann. Dadurch ist das Risiko, dass eine unbeabsichtigte Fehlbeladung bzw. eine Nichtbeladung zuverlässig erfasst und als Fehler erkannt wird, zusätzlich reduziert. Insbesondere können dadurch Waren 2 erfasst werden, die zwar entlang der Rutschfläche 72 vorbei an der Abgangs-Erkennungseinheit 71 geführt und dadurch erfasst werden, aber aufgrund einer Störung nicht in dem Sammelförderbehälter 58, sondern auf der Prallplatte 75 landen.

Insbesondere stehen die erste Förderschiene 20 und die zweite Förderschiene 73 fördertechnisch in Verbindung.

Nachfolgend wird anhand von Fig. 4 und 5 die Funktion der Umladestation näher erläutert.

Förderbehälter 7, die jeweils insbesondere mit genau einer Ware 2 beladen sind, werden in der Hängeförderanlage 1 mittels der Abgabeweiche 59 der ersten Förderschiene 20 zugeführt und zu der Entladeposition gefördert.

Dazu erfolgt an der ersten Vereinzelungseinheit 60 eine Vereinzelung der Förderbehälter 7. Mittels der Seitenführung 61 wird eine unbeabsichtigte Pendelbewegung der Förderbehälter 7 unterbunden.

In der Entladeposition wird der Förderbehälter 7 mittels der Entladeeinheit 62 automatisch an seiner Unterseite geöffnet. Die in dem Förderbehälter 7 enthaltene Ware 2 fällt schwerkraftbedingt an der Unterseite des Förderbehälters 7 heraus und gelangt durch den Zuführtrichter 66 in den Pufferspeicher 65. Vorteilhaft ist es, wenn das automatische Entladen der Förderbehälter 7 erfolgt, ohne dass die Förderbewegung der Förderbehälter 7 gestoppt werden muss. Das Öffnen der Förderbehälter 7 erfolgt sozusagen "im Vorbeifahren" an der Entladeposition. Ein derartiger automatischer Entladeprozess ist besonders effizient und ermöglicht eine hohe Durchsatzrate beim Entladen.

Nach dem Entladen wird der geleerte Förderbehälter 7 von der Entladeposition zu der zweiten Vereinzelungseinheit 63 und der Aufgabeweiche 64 transportiert, mittels der der geleerte Förderbehälter 7 in die Hängeförderanlage 1 zurückgeführt und insbesondere über die Rückführstrecke 16 weitergefördert wird.

Nachfolgend können weitere Förderbehälter 7 sukzessive in den Pufferspeicher 65 entladen werden, wobei die einzelnen Waren 2 in dem Pufferspeicher 65 zwischengespeichert werden. Insbesondere gesteuert durch die Steuereinheit 9 erfolgt das Sammeln der Waren 2 in dem Pufferspeicher 65, insbesondere in Abhängigkeit der Größe, also des Volumens und/oder des Gurtmaßes und/oder in Abhängigkeit des Gewichts der Waren 2. Insbesondere wenn ein zulässiger Schwellwert für Volumen und/oder Gewicht der gesammelten Waren 2 in dem Pufferspeicher 65 erreicht ist, werden die gesammelten Waren aus dem Pufferspeicher 65 abgegeben.

Das Entladen der Waren 2 aus den Förderbehältern 7 in den Pufferspeicher 65 wird mittels der Zugangs-Erkennungseinheit 70 erfasst. Die Abgabe der Waren 2 aus dem Pufferspeicher 65 in den Sammelförderbehälter 58 wird mittels der Abgangs-Erkennungseinheit 71 erfasst. Vorteilhaft ist, dass die wesentlichen Informationen der Waren 2 mit dem jeweiligen Förderbehälter 7 verknüpft waren. Bei der Abgabe der Waren 2 aus dem jeweiligen Förderbehälter 7 werden die entsprechenden Informationen dem Pufferspeicher 65 logisch vererbt.

Die Abgabe der Waren 2 erfolgt dadurch, dass das Abgabeelement 67, das zum Sammeln der Waren 2 in der Halteposition gemäß Fig. 4 angeordnet ist, mittels des Aktuators 69 in die Abgabeposition geschwenkt wird. Die Waren 2 können selbsttätig, also schwerkraftbedingt aus dem Pufferspeicher 65 in den darunter angeordneten, insbesondere geöffneten, Sammelförderbehälter 58, insbesondere durch den Beladerahmen 47, gelangen. Bei der Abgabe der Waren aus dem Pufferspeicher 65 in die Sammelförderbehälter 58 werden die entsprechenden Informationen der Waren 2 an den Sammelförderbehälter 58 logisch vererbt.

Für den unwahrscheinlichen Fall, dass eine Ware 2 in unbeabsichtigter Weise fehlbeladen wird, also nicht in einem Sammelförderbehälter 58 landet, wird diese Ware 2 an der Prallplatte 75 und dem Fehlbeladungssensor 76 erfasst und ein entsprechendes Fehlersignal an die Steuerungseinheit 9 übermittelt.

Der beladene Sammelförderbehälter 58 wird aus der Öffnungsposition gemäß Fig. 4 zurück in eine vertikal hängende Transportposition geschwenkt und kann anschließend entlang der zweiten Förderschiene 73 aus der Umladestation 12 herausgefördert werden. Insbesondere wird der so beladene Sammelförderbehälter 58 zu einem Packplatz 13 gefördert, wo die Waren in ein Verpackungsbehältnis 14 geladen werden können.

Mittels der Umladestation 12 können die Waren 2 in der Hängeförderanlage 1 effizient und zielgerichtet gefördert werden. Insbesondere ermöglicht die Umladestation eine vorteilhafte Verdichtung des Warenstroms.

## Patentansprüche

1. Verfahren zum Verdichten eines Warenstroms in einer Hängeförderanlage (1) umfassend die Verfahrensschritte
- Hängefördern von mit jeweils mindestens einer Ware (2) beladenen Förderbehältern (7) in der Hängeförderanlage (1),
- automatisches Entladen der Waren (2) aus mehreren Förderbehältern (7) in einen Sammelförderbehälter (58),
- - Hängefördern des mit den Waren (2) aus mehreren Hängeförderbehältern (7) beladenen Sammelförderbehälters (58) in der Hängeförderanlage (1).

2. Verfahren gemäß Anspruch 1, **dadurch gekennzeichnet, dass** das automatische Entladen ein automatisches Öffnen der Förderbehälter (7) an ihrer Unterseite umfasst.

3. Verfahren gemäß einem der vorstehenden Ansprüche, **dadurch gekennzeichnet, dass** das automatische Entladen der Waren (2) aus mehreren Förderbehältern (7) in einen Pufferspeicher (65) erfolgt, wobei die in dem Pufferspeicher (65) gesammelten Waren (2) automatisch in den Sammelförderbehälter (58) abgegeben werden.

4. Verfahren gemäß Anspruch 3, **dadurch gekennzeichnet, dass** die Förderbehälter (7) beim Entladen jeweils vertikal oberhalb des Pufferspeichers (65) angeordnet sind.

5. Verfahren gemäß Anspruch 3 oder 4, **dadurch gekennzeichnet, dass** jede Ware, die aus einem Förderbehälter (7) in den Pufferspeicher (65) abgegeben wird, mittels einer Zugangs-Erkennungseinheit (70) erfasst wird.

6. Verfahren gemäß einem der Ansprüche 3 bis 5, **dadurch gekennzeichnet, dass** die aus dem Pufferspeicher (65) in den Sammelförderbehälter (58) abgegebenen Waren (2) mittels einer Abgangs-Erkennungseinheit (71) erfasst werden.

7. Verfahren gemäß einem der Ansprüche 3 bis 6, **dadurch gekennzeichnet, dass** der Sammelförderbehälter (58) beim Abgeben der Waren (2) aus dem Pufferspeicher (65) vertikal unterhalb des Pufferspeichers (65) angeordnet ist.

8. Verfahren gemäß einem der Ansprüche 3 bis 7, **dadurch gekennzeichnet, dass** das Sammeln der Waren (2) in dem Pufferspeicher (65) in Abhängigkeit mindestens einer Wareneigenschaft erfolgt, insbesondere abhängig von Größe, insbesondere Volumen und/oder Gurtmaß, und/oder abhängig von Gewicht der Waren (2) und/oder auftragsabhängig.

9. Umladestation zum Verdichten eines Warenstroms in einer Hängeförderanlage umfassend
- eine erste Förderschiene (20) und mehrere Förderbehälter (7), die mit jeweils mindestens einer Ware (2) beladen und entlang der ersten Förderschiene (20) verlagerbar sind,
- eine entlang der ersten Förderschiene (20) angeordnete Entladeeinheit (62) zum automatischen Entladen der Förderbehälter (7),
- eine zweite Förderschiene (73) und mindestens einen Sammelförderbehälter (58), der zur Aufnahme der Waren (2) der Förderbehälter (7) ausgeführt und entlang der zweiten Förderschiene (73) verlagerbar ist.

10. Umladestation gemäß Anspruch 9, **gekennzeichnet durch** einen Pufferspeicher (65) zum Aufnehmen der aus den Förderbehältern (7) entladenen Waren (2), wobei der Pufferspeicher (65) ein schaltbares Abgabeelement (67) zum automatischen Abgeben der in dem Pufferspeicher (65) gesammelten Waren (2) aufweist.

11. Umladestation gemäß Anspruch 10, **dadurch gekennzeichnet, dass** die erste Förderschiene (20) vertikal oberhalb des Pufferspeichers (65) angeordnet ist.

12. Umladestation gemäß Anspruch 10 oder 11, **dadurch gekennzeichnet, dass** die zweite Förderschiene (73) vertikal unterhalb des Pufferspeichers (65) angeordnet ist.

13. Umladestation gemäß einem der Ansprüche 10 bis 12, **dadurch gekennzeichnet, dass** dem Pufferspeicher (65) eine Zugangs-Erkennungseinheit (70) zum Erfassen der in den Pufferspeicher (65) abgegebenen Waren (2) und/oder eine Abgangs-Erkennungseinheit (71) zum Erfassen der aus dem Pufferspeicher (65) abgegebenen Waren (2) zugeordnet ist.

14. Umladestation gemäß einem der Ansprüche 10 bis 13, **dadurch gekennzeichnet, dass** das schaltbare Abgabeelement (67) als öffenbarer Boden ausgeführt ist, der insbesondere in der Bodenebene verlagerbar oder schwenkbar ist.

15. Umladestation gemäß einem der Ansprüche 9 bis 14, **dadurch gekennzeichnet, dass** entlang der zweiten Förderschiene (73) eine Öffnungseinheit zum automatischen Öffnen eines Sammelförderbehälters (58) angeordnet ist, wobei insbesondere vertikal unterhalb des Pufferspeichers (65) eine Rutschfläche (72) angeordnet ist, die der Öffnungseinheit zugewandt ist, wobei insbesondere die Abgangs-Erkennungseinheit (71) in einem der Öffnungseinheit zugewandten Endbereich der Rutschfläche (72) angeordnet ist.
